# EUROPEAN PATENT APPLICATION

(11) **EP 2 056 643 A2**
(43) Date of publication of application: **06.05.2009**
(21) Application number: 08018705.7
(22) Date of filing: 24.10.2008
(51) Int. Cl.: H04W 52/42

(54) **Wireless diversity reception apparatus and reception method**

(30) Priority: 02.11.2007 JP 2007285897
(71) Applicant: Nec Corporation, Tokyo 108-8001 (JP)
(72) Inventor: Yuki, Kogure, Tokyo (JP)
(74) Representative: Glawe, Delfs, Moll

(57) **Abstract**

In a wireless diversity reception apparatus, a combining unit RAKE-combines signals of multipaths transmitted from a mobile station and received by a plurality of antennas. An antenna failure detection unit detects an antenna failure based on selection result information representing paths used for RAKE combining. A mobile station control unit calculates the total reception power value of a cell in accordance with an antenna failure detection state and outputs power control information to make the total reception power value of the cell match a target total reception power value. A transmission unit transmits the power control information to the mobile station to perform transmission power control of the mobile station. A wireless diversity reception method is also disclosed.

## Description

This application is based upon and claims the benefit of priority from Japanese patent application No. 2007-285897, filed on November 2, 2007, the disclosure of which is incorporated herein in its entirety by reference.

### Background of the Invention

The present invention relates to a wireless diversity reception apparatus and reception method and, more particularly, to a wireless diversity reception apparatus and reception method of controlling the transmission power of each mobile station.

In a mobile communication system, if a failure occurs outside the monitoring target between a base station and each antenna, a base station apparatus detects the deterioration of the communication service based on long-term statistical data. Since long time is required until failure detection, the MTBF (Mean Time Between Failure) may degrade.

Japanese Laid-Open Patent No. 2002-535915 (reference 1) discloses a technique of causing a reception apparatus having a plurality of antennas to acquire information about a failure from antenna reception signals.

Japanese Patent Laid-Open No. 11-088247 (reference 2) discloses a technique of switching an antenna to a RAKE combining target in accordance with an antenna reception state.

However, neither of the techniques disclosed in references 1 and 2 can measure accurate total reception power at the time of antenna failure occurrence. For this reason, mobile station power control of the base station apparatus cannot correctly function.

If the base station apparatus calculates a low total reception power value due to an antenna failure, it requests excess power transmission by mobile station transmission power control. Since interference power increases, the reception characteristic in the base station apparatus degrades. When a high total reception power value is calculated, the base station apparatus requests only too little power transmission by mobile station transmission power control. Since the effective power resource of the cell cannot be used, the throughput in the cell becomes low.

### Summary of the Invention

An exemplary object of the invention is to effectively perform mobile station transmission power control even when an antenna failure has occurred.

A wireless diversity reception apparatus according to an exemplary aspect of the invention includes combining means for RAKE-combining signals of multipaths transmitted from a mobile station and received by a plurality of antennas, antenna failure detection means for detecting an antenna failure based on selection result information representing paths used for RAKE combining, mobile station control means for calculating a total reception power value of a cell in accordance with an antenna failure detection state and outputting power control information to make the total reception power value of the cell match a target total reception power value, and transmission means for transmitting the power control information to the mobile station to perform transmission power control of the mobile station.

A wireless diversity reception method according to another exemplary aspect of the invention includes the steps of RAKE-combining signals of multipaths transmitted from a mobile station and received by a plurality of antennas, detecting an antenna failure based on selection result information representing paths used for RAKE combining, calculating a total reception power value of a cell in accordance with an antenna failure detection state, outputting power control information to make the total reception power value of the cell match a target total reception power value, and transmitting the power control information to the mobile station to perform transmission power control of the mobile station.

### Brief Description of the Drawings

Fig. 1 is a block diagram showing the arrangement of a mobile communication system including a base station apparatus according to the first exemplary embodiment of the present invention;
Fig. 2 is a block diagram showing the arrangement of the base station apparatus shown in Fig. 1;
Fig. 3 is a block diagram showing the arrangement of an antenna failure detection unit shown in Fig. 2;
Fig. 4 is a block diagram showing the arrangement of a mobile station control unit shown in Fig. 2;
Fig. 5 is a timing chart showing the RAKE combining operation of a combining unit shown in Fig. 2;
Fig. 6 is a flowchart illustrating the operations of the combining unit and the antenna failure detection unit shown in Fig. 2;
Fig. 7 is a block diagram showing the arrangement of a base station apparatus according to the second exemplary embodiment of the present invention;
Fig. 8 is a block diagram showing the arrangement of a base station apparatus according to the third exemplary embodiment of the present invention;
Fig. 9 is a block diagram showing the arrangement of an antenna failure detection unit in a base station apparatus according to the fifth exemplary embodiment of the present invention;
Fig. 10 is a block diagram showing the arrangement of a base station apparatus according to the sixth exemplary embodiment of the present invention; and
Fig. 11 is a block diagram showing the arrangement of a mobile station control unit shown in Fig. 10.

### Exemplary Embodiments

An exemplary embodiment of the present invention is directed to a wireless diversity reception apparatus such as a base station apparatus having a diversity reception function in a mobile communication system. The exemplary embodiment is particularly directed to a technique of controlling the transmission power of each mobile station, thereby controlling the total uplink reception power of a wireless diversity reception apparatus and speeding up transmission in HSUPA (High Speed Uplink Packet Access) which is an uplink speed-enhancement technology in CDMA (Code Division Multiple Access).

A base station apparatus receives reception signals of two or more antenna systems at different positions, measures the total reception power of each antenna reception signal, and calculates the total reception power of each cell using the measurement result of each antenna. However, if a failure associated with the antenna reception signal occurs outside the monitoring target between the base station and each antenna, the total reception power measurement value becomes incorrect. Since the accuracy of the total reception power calculated for each cell degrades, measures for antenna failure detection are necessary. Measures for preventing degradation in the gain upon RAKE-combining decoding are also needed.

As a characteristic feature of the exemplary embodiment of the present invention, an antenna failure is detected from an antenna reception signal, and when measuring the total reception power or combining antenna reception signals, whether to use the total reception power value or reception signal of the antenna having the failure is selectable.

The exemplary embodiment of the present invention will be explained below assuming the W-CDMA standard technique. Points common to the associated techniques of W-CDMA will briefly be described as needed.

### [First Exemplary Embodiment]

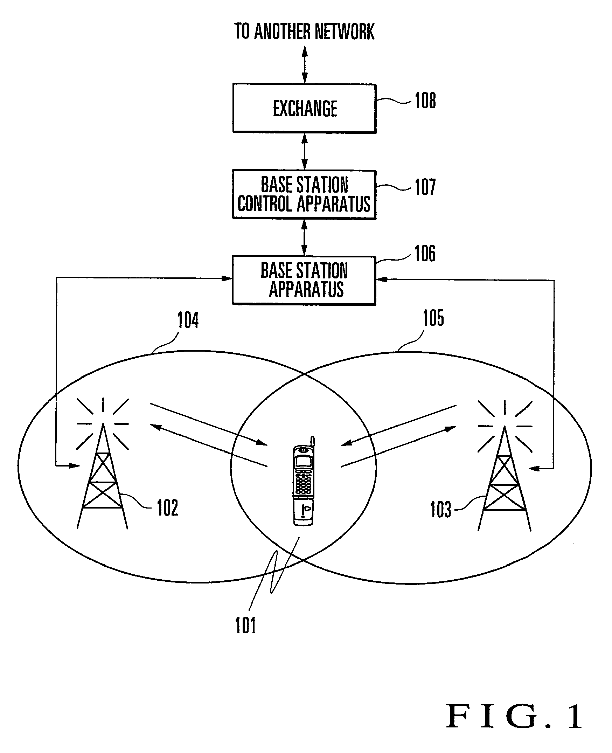

Fig. 1 shows the arrangement of a mobile communication system including a base station apparatus according to the first exemplary embodiment of the present invention. A mobile station 101 is a wireless communication terminal such as a portable phone. Antennas 102 and 103 are two antenna systems installed in one cell corresponding to the communication range of a single base station apparatus 106. Areas 104 and 105 are radio areas covered by the antennas 102 and 103, respectively.

Referring to Fig. 1, the mobile station 101 is located in the overlap area of the areas 104 and 105. Each of the mobile station 101 and the base station apparatus 106 transmits power control information to the counter device and controls the transmission power of the counter device based on the result of comparison between the target reception quality and the actual reception quality. The counter device of the mobile station 101 is the base station apparatus 106. The counter device of the base station apparatus 106 is the mobile station 101.

A base station control apparatus 107 is communicably connected to the base station apparatus 106 and controls it. The base station control apparatus 107 performs control such as setting and deletion of paths in association with, e.g., the call and handover of the mobile station 101.

An exchange 108 performs line switching between the mobile network formed by the mobile communication system shown in Fig. 1 and another network such as a public telephone network. The exchange 108 is connected to the base station apparatus 106 via the base station control apparatus 107. The mobile station 101 is connected to a communication partner in another network via the base station apparatus 106 and the exchange 108 to communicate with the communication partner.

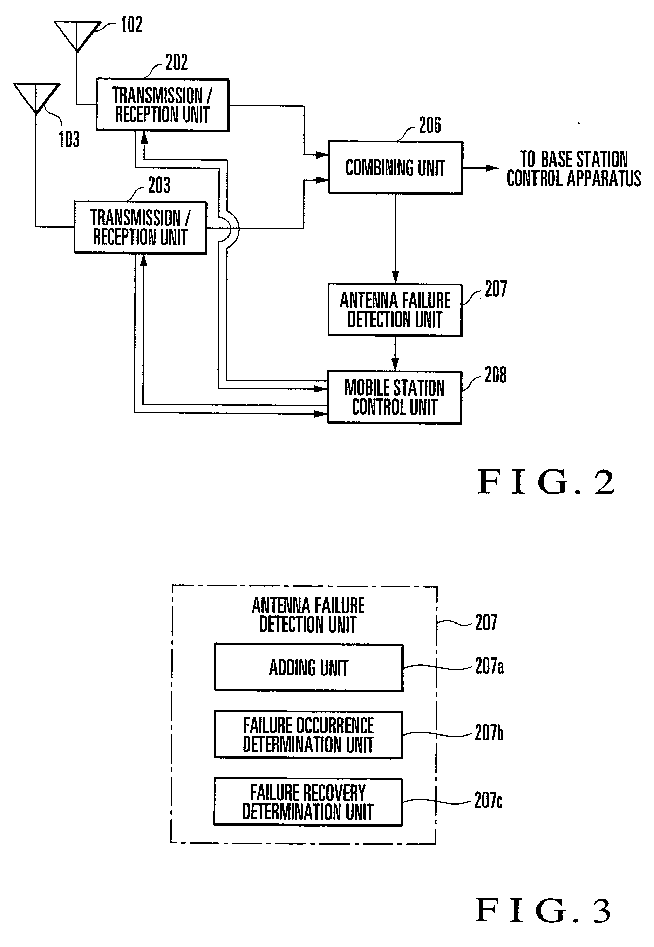

Fig. 2 shows the arrangement of the base station apparatus 106. Reception by the base station apparatus 106 which has two antenna reception systems and performs RAKE-combining reception between the antennas will be described here.

The base station apparatus 106 serving as a wireless diversity reception apparatus includes transmission/reception units 202 and 203, combining unit 206, antenna failure detection unit 207, and mobile station control unit 208. The transmission/reception units 202 and 203 form a transmission means for transmitting power control information (to be described later) to the mobile station 101.

Signals the antennas 102 and 103 have received from the mobile station 101 are input to the transmission/reception units 202 and 203, respectively. The transmission/reception units 202 and 203 convert the antenna reception signals received by the antennas 102 and 103 into baseband signals. The transmission/reception units 202 and 203 also calculate the total reception power values of the signals received by the antennas 102 and 103 and notify the mobile station control unit 208 of the calculated total reception power values. The transmission/reception units 202 and 203 also transmit, from the antennas 102 and 103 to the mobile station 101, power control information received from the mobile station control unit 208.

The combining unit 206 combines the baseband signals converted by the transmission/reception units 202 and 203 and outputs the signal of the combining result to the base station control apparatus 107. That is, the combining unit 206 RAKE-combines the multipath signals transmitted from the mobile station 101 and received by the antennas 102 and 103. The combining unit 206 also outputs, to the antenna failure detection unit 207, selection result information representing the paths used for combining.

The antenna failure detection unit 207 detects an antenna failure based on the selection result information output from the combining unit 206 and notifies the mobile station control unit 208 of the antenna failure information. The antenna failure detection unit 207 includes an adding unit 207a, failure occurrence determination unit 207b, and failure recovery determination unit 207c, as shown in Fig. 3. The functions of the units will be described later.

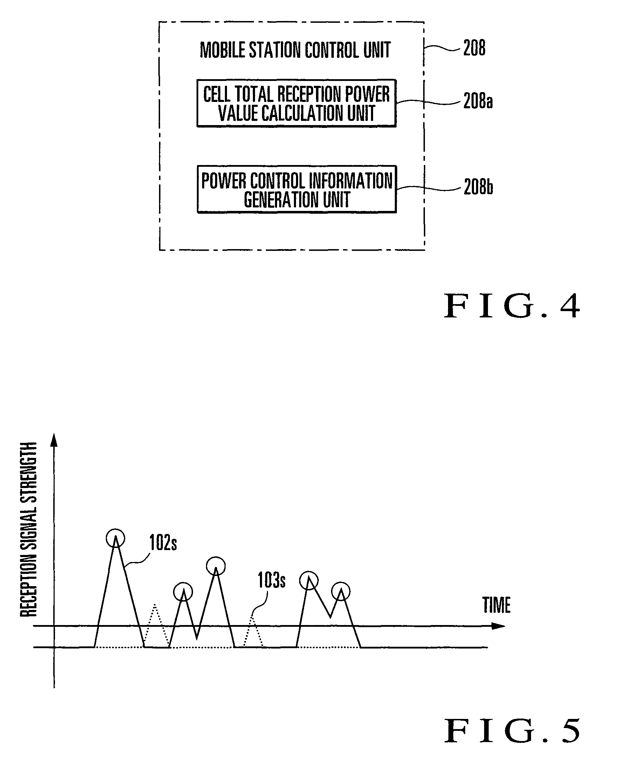

The mobile station control unit 208 calculates the total reception power value of the cell in accordance with the antenna failure detection state and outputs power control information to make the total reception power value of the cell match the target total reception power value. The mobile station control unit 208 includes a cell total reception power value calculation unit 208a and a power control information generation unit 208b, as shown in Fig. 4.

Upon recognizing that no antenna failure has occurred, the cell total reception power value calculation unit 208a calculates the total reception power value of the cell based on the total reception power values received from the transmission/reception units 202 and 203. Upon recognizing based on updated antenna failure information that an antenna failure has occurred, the cell total reception power value calculation unit 208a calculates the total reception power value of the cell without using the total reception power value of the antenna with the failure.

The power control information generation unit 208b generates power control information to make the calculated total reception power value of the cell match the target total reception power value, and outputs the power control information to the transmission/reception units 202 and 203.

The transmission/reception units 202 and 203 transmit the power control information received from the power control information generation unit 208b of the mobile station control unit 208 to the mobile station 101 via the antennas 102 and 103. The transmission power control of the mobile station 101 is thus done so that the total reception power value of the cell becomes closer to the target total reception power value.

The arrangement of the exemplary embodiment has been described above in detail. Since the base station control apparatus 107 and the exchange 108 shown in Fig. 1 are known well by those skilled in the art and irrelevant to the present invention, a description of their detailed arrangements will be omitted.

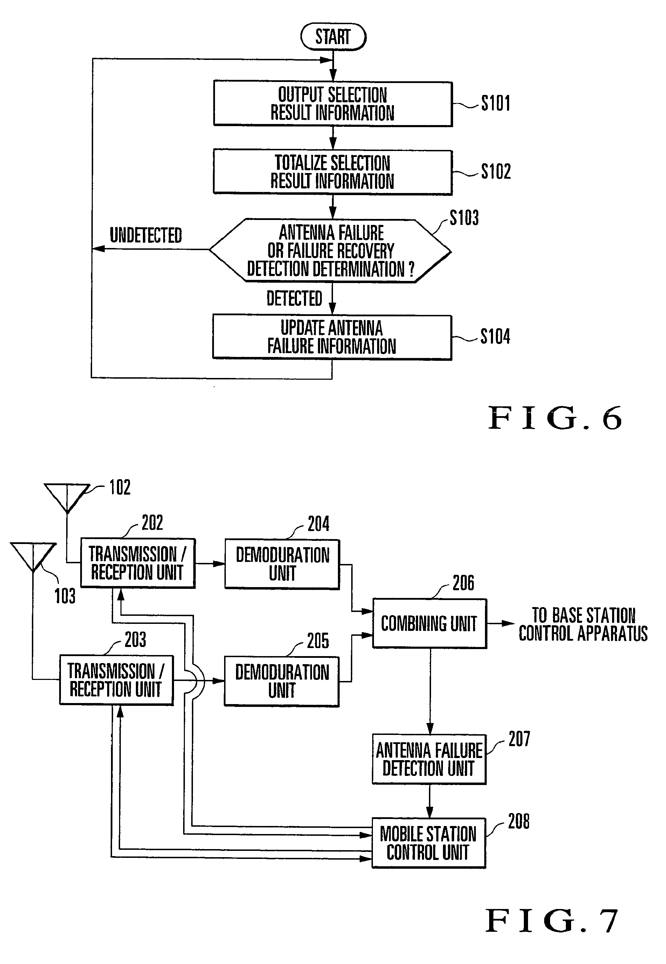

The operation of the combining unit 206 shown in Fig. 2 will be explained next using the image of RAKE combining processing shown in Fig. 5 and the flowchart in Fig. 6. Referring to Fig. 5, the abscissa represents the time, and the ordinate represents the signal strengths of antenna reception signals. An antenna reception signal 102s indicated by the solid line is a signal received by the antenna 102. An antenna reception signal 103s indicated by the dotted line is a signal received by the antenna 103. Fig. 6 shows an algorithm for detecting an antenna failure using path selection result information at the time of RAKE combining.

In the antenna reception signals 102s and 103s received by the antennas 102 and 103, fading occurs so that the reception signal strengths vary due to the multipaths during radio wave propagation. Hence, a time lag is generated at parts having high signal strengths.

The combining unit 206 monitors the plurality of paths to enable RAKE combining even in the multipaths with the time lag. Assume that five combining target paths are set, which are selected in descending order of reception signal strengths.

In the example shown in Fig. 5, antenna reception signals marked with circles are the signals of paths selected as combining targets by the combining unit 206. In the example shown in Fig. 5, only the antenna reception signals of paths to arrive at the antenna 102 are selected as the targets of RAKE combining.

According to the circumstances, only the antenna reception signals of paths to arrive at the antenna 103 are selected as the targets of RAKE combining. In some cases, the target of RAKE combining are selected from both the antenna reception signals of paths to arrive at the antenna 102 and the antenna reception signals of paths to arrive at the antenna 103.

In this exemplary embodiment, information representing paths used for RAKE combining will be referred to as selection result information.

The combining unit 206 combines the antenna reception signals of the selected paths and outputs the signal of the combining result to the base station control apparatus 107.

The operations of the combining unit 206 and the antenna failure detection unit 207 from selection result information output to antenna failure detection will be described next with reference to the flowchart in Fig. 6.

The combining unit 206 outputs the selection result information representing the paths used for RAKE combining to the antenna failure detection unit 207 (step S101).

The adding unit 207a of the antenna failure detection unit 207 adds the selection result information for each cell every sampling period Ts (step S102). Adding selection result information indicates classifying pieces of selection result information into three types, i.e., selection result information including paths to arrive at the antenna 102, selection result information including paths to arrive at the antenna 103, and selection result information including both paths to arrive at the antenna 102 and paths to arrive at the antenna 103, and counting the number of pieces of selection result information of each type.

The failure occurrence determination unit 207b of the antenna failure detection unit 207 detects an antenna failure based on the sum of selection result information for a predetermined time Td (Td > Ts) (step S103).

Assume that the added selection result information contains the selection result information including only paths to arrive at the antenna 102 and the selection result information including both paths to arrive at the antenna 102 and paths to arrive at the antenna 103 but no selection result information including only paths to arrive at the antenna 103. If a ratio N₁₀₂/Nₐₗₗ of the number N₁₀₂ of selection result information including paths to arrive at the antenna 102 to the total number Nₐₗₗ of added selection result information exceeds a predetermined threshold value (x%), it is determined that a failure has occurred in the antenna 103 (step S103).

Assume that the added selection result information contains the selection result information including only paths to arrive at the antenna 103 and the selection result information including both paths to arrive at the antenna 102 and paths to arrive at the antenna 103 but no selection result information including only paths to arrive at the antenna 102. If a ratio N₁₀₃/Nₐₗₗ of the number N₁₀₃ of selection result information including paths to arrive at the antenna 103 to the total number Nₐₗₗ of added selection result information exceeds the predetermined threshold value (x%), it is determined that a failure has occurred in the antenna 102 (step S103).

If no antenna failure is detected in step S103, the process returns to step S101 to repeat the process in steps S101 to S103 every predetermined time Td. If an antenna failure is detected in step S103, the antenna failure detection unit 207 updates antenna failure information and sends it to the mobile station control unit 208 (S104). At this time, the updated antenna failure information represents that a failure has occurred in the antenna 102 or 103.

After determining that a failure has occurred in the antenna 103, the process in steps S101 to S103 is repeated. During this process, if the ratio N₁₀₂/Nₐₗₗ of the number N₁₀₂ of selection result information including paths to arrive at the antenna 102 to the total number Nₐₗₗ of selection result information added in the predetermined time Td becomes equal to or smaller than the threshold value (x%), the failure recovery determination unit 207c of the antenna failure detection unit 207 determines that the failure of the antenna 103 has recovered (step S103).

Similarly, after determining that a failure has occurred in the antenna 102, the process in steps S101 to S103 is repeated. During this process, if the ratio N₁₀₃/Nₐₗₗ of the number N₁₀₃ of selection result information including paths to arrive at the antenna 103 to the total number Nₐₗₗ of selection result information added in the predetermined time Td becomes equal to or smaller than the threshold value (x%), the failure recovery determination unit 207c of the antenna failure detection unit 207 determines that the failure of the antenna 102 has recovered (step S103).

If recovery of an antenna failure is detected in step S103, the antenna failure detection unit 207 updates antenna failure information and sends it to the mobile station control unit 208 (S104). At this time, the updated antenna failure information represents that the failure of the antenna 102 or 103 has recovered.

The process in steps S101 to S104 is thus repeated every predetermined time Td. In the antenna failure detection determination, simple moving average or weighted moving average for assigning weights to individual information is applicable in each specific section. Moving average is generally known well, and a detailed description thereof will be omitted.

The cell total reception power value calculation unit 208a of the mobile station control unit 208 calculates the total reception power value of each cell. At this time, the cell total reception power value calculation unit 208a calculates the total reception power value of the cell by averaging the total reception power values of the antennas (the total reception power values sent from the transmission/reception units 202 and 203) associated with the cell. However, when updated antenna failure information is received from the antenna failure detection unit 207, the cell total reception power value calculation unit 208a calculates the total reception power value in consideration of the antenna failure information.

More specifically, upon recognizing based on the updated antenna failure information that a failure has occurred in the antenna 102 or 103, the cell total reception power value calculation unit 208a calculates the total reception power value of the cell without using the total reception power value of the antenna 102 or 103 with the failure. For example, if the two antennas 102 and 103 are associated with the cell, and a failure has occurred in the antenna 102, the total reception power value of the antenna 102 is directly defined as the total reception power value of the cell.

Additionally, upon recognizing based on the updated antenna failure information that the failure of the antenna 102 or 103 has recovered, the cell total reception power value calculation unit 208a calculates the total reception power value of the cell using the total reception power value of the antenna 102 or 103 whose failure has recovered as well. For example, if the failure of the antenna 102 has recovered, the average value of the total reception power value of the antenna 102 and that of the antenna 103 is defined as the total reception power value of the cell.

As described above, this exemplary embodiment has the following effects. As the first effect, if the base station apparatus 106 cannot detect a failure in hardware between the base station apparatus 106 and the antennas 102 and 103, the antenna failure can be detected based on only the signal strengths of the paths of antenna reception signals.

As the second effect, since the base station apparatus 106 can detect an antenna failure based on the signal strengths of the paths of antenna reception signals, transmission power control of the mobile station 101 can be done without any influence of a degradation in the antenna reception signals.

As the third effect, since transmission power control of the mobile station 101 can be done without any influence of a degradation in the antenna reception signals, it is possible to effectively control the power recourse of the cell and optimize the throughput of the user and cell even when an antenna failure has occurred.

As the fourth effect, antenna failure detection according to this exemplary embodiment shortens the time of communication service deterioration and improves the MTBF (Mean Time Between Failure). The communication service may deteriorate if a failure in the reception system cannot be detected. However, according to this exemplary embodiment, it is possible to quickly detect an antenna failure that leads to communication service deterioration detectable based on long-term statistical data. For this reason, the time of communication service deterioration shortens.

### [Second Exemplary Embodiment]

The second exemplary embodiment of the present invention will be described. Fig. 7 shows the arrangement of a base station apparatus according to the second exemplary embodiment of the present invention. The same reference numerals as in Fig. 2 denote the same parts in Fig. 7. In this exemplary embodiment, the first exemplary embodiment will be explained in more detail. The base station apparatus includes transmission/reception units 202 and 203, demodulation units 204 and 205, combining unit 206, antenna failure detection unit 207, and mobile station control unit 208.

The demodulation units 204 and 205 demodulate baseband signals converted by the transmission/reception units 202 and 203, respectively, and output the demodulated signals to the combining unit 206.

The combining unit 206 combines the signals output from the demodulation units 204 and 205 and outputs the signal of the combining result to a base station control apparatus 107. The combining unit 206 also outputs, to the antenna failure detection unit 207, selection result information representing the paths used for combining. The remaining components are the same as in the first exemplary embodiment, and a description thereof will not be repeated.

### [Third Exemplary Embodiment]

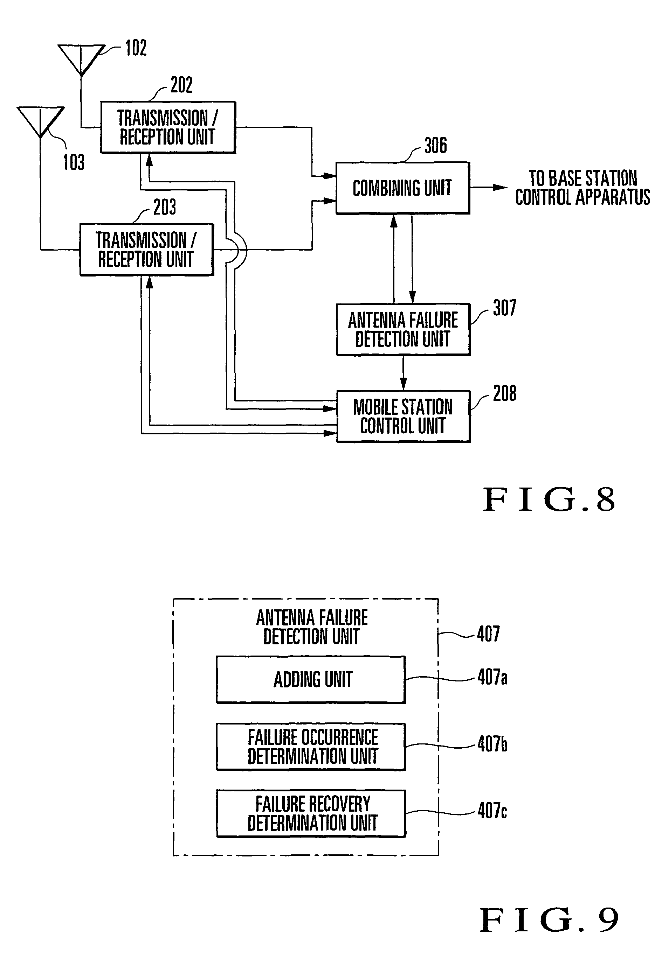

The third exemplary embodiment of the present invention will be described. Fig. 8 shows the arrangement of a base station apparatus according to the third exemplary embodiment of the present invention. The same reference numerals as in Fig. 2 denote the same parts in Fig. 8. A combining unit 306 and an antenna failure detection unit 307 of this exemplary embodiment are formed by adding some functions to the combining unit 206 and the antenna failure detection unit 207 of the first exemplary embodiment.

The antenna failure detection unit 307 sends antenna failure information to the combining unit 306 as well.

Upon recognizing based on updated antenna failure information that an antenna failure has occurred, the combining unit 306 excludes the reception signal of the antenna with the failure from selection of antenna reception signals to be used for RAKE combining.

If the reception signal of the antenna with the failure is included in the targets of RAKE combining, no gain by RAKE combining is obtained, and a degradation occurs. According to this exemplary embodiment, it is possible to suppress any degradation in the RAKE combining result.

### [Fourth Exemplary Embodiment]

The fourth exemplary embodiment of the present invention will be described. In the first and second exemplary embodiments, when both of the signals of the antenna 102 and 103 are RAKE-combined, antenna failure detection may fail. To prevent this, in this exemplary embodiment, the result of RAKE combining from both antennas is excluded.

More specifically, assume that added selection result information contains no selection result information including only paths to arrive at an antenna 103. If a ratio N'₁₀₂/Nₐₗₗ of the number N'₁₀₂ of selection result information including only paths to arrive at an antenna 102 to the total number Nₐₗₗ of added selection result information exceeds a predetermined threshold value (y%), a failure occurrence determination unit 207b of an antenna failure detection unit 207 determines that a failure has occurred in the antenna 103 (step S103).

Assume that added selection result information contains no selection result information including only paths to arrive at the antenna 102. If a ratio N'₁₀₃/Nₐₗₗ of the number N'₁₀₃ of selection result information including only paths to arrive at the antenna 103 to the total number Nₐₗₗ of added selection result information exceeds the predetermined threshold value (y%), the failure occurrence determination unit 207b determines that a failure has occurred in the antenna 102 (step S103).

After determining that a failure has occurred in the antenna 103, the process in steps S101 to S103 is repeated. During this process, if the ratio N'₁₀₂/Nₐₗₗ of the number N'₁₀₂ of selection result information including only paths to arrive at the antenna 102 to the total number Nₐₗₗ of added selection result information becomes equal to or smaller than the threshold value (y%), a failure recovery determination unit 207c of the antenna failure detection unit 207 determines that the failure of the antenna 103 has recovered (step S103).

After determining that a failure has occurred in the antenna 102, the process in steps S101 to S103 is repeated. During this process, if the ratio N'₁₀₃/Nₐₗₗ of the number N'₁₀₃ of selection result information including only paths to arrive at the antenna 103 to the total number Nₐₗₗ of added selection result information becomes equal to or smaller than the threshold value (y%), the failure recovery determination unit 207c of the antenna failure detection unit 207 determines that the failure of the antenna 102 has recovered (step S103).

This exemplary embodiment can raise the reliability of antenna failure detection in the above-described way.

### [Fifth Exemplary Embodiment]

The fifth exemplary embodiment of the present invention will be described. Fig. 9 shows the arrangement of an antenna failure detection unit in a base station apparatus according to the fifth exemplary embodiment of the present invention. In this exemplary embodiment, in a method of determining occurrence and recovery of an antenna failure, the total number of paths used for RAKE combining is calculated for each antenna. When the ratio of the path counts of antennas 102 and 103 exceeds a predetermined threshold value (Z%), an antenna failure is detected.

More specifically, an adding unit 407a of an antenna failure detection unit 407 in the base station apparatus calculates the total number of paths included in selection result information for each antenna (step S102).

If a ratio NP₁₀₃/NP₁₀₂ of the number NP₁₀₃ of paths to arrive at the antenna 103 to the number NP₁₀₂ of paths to arrive at the antenna 102 exceeds the threshold value (Z%), a failure occurrence determination unit 407b determines that a failure has occurred in the antenna 102 (step S103). If a ratio NP₁₀₂/NP₁₀₃ of the number NP₁₀₂ of paths to arrive at the antenna 102 to the number NP₁₀₃ of paths to arrive at the antenna 103 exceeds the threshold value (Z%), the failure occurrence determination unit 407b determines that a failure has occurred in the antenna 103 (step S103).

After determining that a failure has occurred in the antenna 102, if the ratio NP₁₀₃/NP₁₀₂ becomes equal to or smaller than the threshold value (Z%), a failure recovery determination unit 407c determines that the failure of the antenna 102 has recovered (step S103). After determining that a failure has occurred in the antenna 103, if the ratio NP₁₀₂/NP₁₀₃ becomes equal to or smaller than the threshold value (Z%), the failure recovery determination unit 407c determines that the failure of the antenna 103 has recovered (step S103).

### [Sixth Exemplary Embodiment]

The sixth exemplary embodiment of the present invention will be described next. In the first and second exemplary embodiments, the total reception power value of the cell is calculated without using the total reception power value of an antenna with a failure. In the third exemplary embodiment, the reception signal of an antenna with a failure is excluded from selection of antenna reception signals to be used for RAKE combining.

In the sixth exemplary embodiment, weights are assigned to the total reception power value and antenna reception signal of each antenna, thereby reducing the influence of an antenna failure on the total reception power value calculation result and the RAKE combining result.

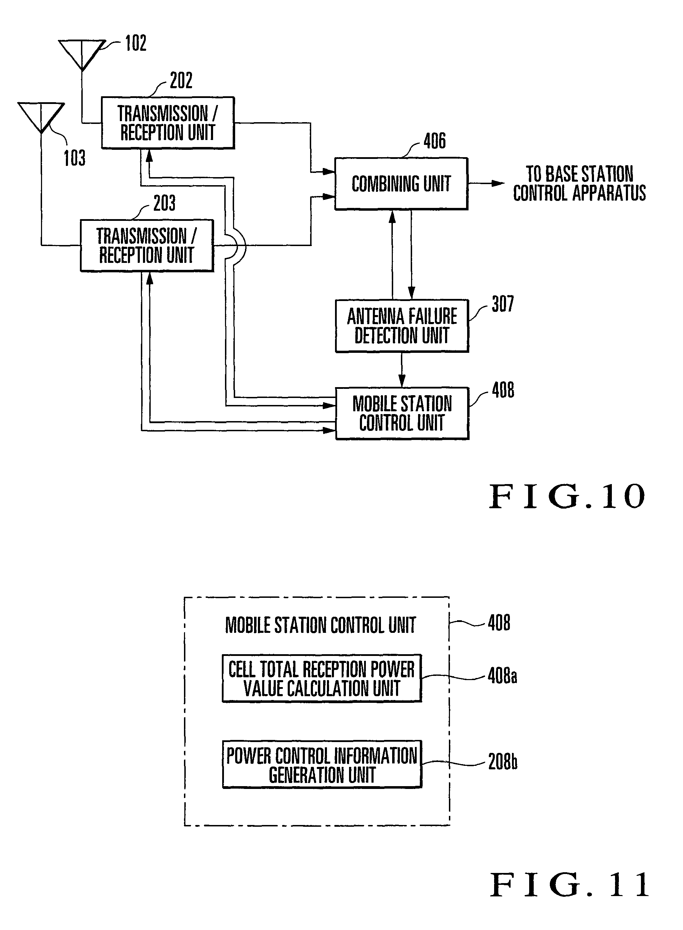

Fig. 10 shows the arrangement of a base station apparatus according to the sixth exemplary embodiment of the present invention. The same reference numerals as in Figs. 2 and 8 denote the same parts in Fig. 10. In this exemplary embodiment, the functions of a combining unit 406 and a mobile station control unit 408 are partially different from those of the combining unit 206 and the mobile station control unit 208 of the first exemplary embodiment. Fig. 11 shows the arrangement of the mobile station control unit 408. The same reference numerals as in Fig. 4 denote the same parts in Fig. 11.

When an antenna failure detection unit 307 in the base station apparatus detects an antenna failure, a cell total reception power value calculation unit 408a of the mobile station control unit 408 changes the weighting factor to be applied to the total reception power value of an antenna without any failure and the weighting factor to be applied to the total reception power value of the antenna with the failure, i.e., makes the weighting factor to be applied to the total reception power value of the antenna without any failure larger. Then, the average value of the weighted total reception power value of the antenna without any failure and the weighted total reception power value of the antenna with the failure is defined as the total reception power value of the cell. This reduces the influence of the antenna failure on the total reception power value calculation result.

The cell total reception power value calculation unit 408a may calculate the total reception power value of the cell for the duration of an antenna failure while gradually increasing the weighting factor to be applied to the total reception power value of the antenna without any failure. If the antenna failure continues for a predetermined time or more, the cell total reception power value calculation unit 408a may exclude the total reception power value of the antenna with the failure from calculation of the total reception power value of the cell.

When the antenna failure detection unit 307 detects an antenna failure, the combining unit 406 selects paths, as in the first exemplary embodiment, and then changes the weighting factor to be applied to the reception signal of an antenna without any failure and the weighting factor to be applied to the reception signal of the antenna with the failure, i.e., makes the weighting factor to be applied to the reception signal of the antenna without any failure larger. The antenna reception signals are weighted in this way, and the weighted antenna reception signals are combined. This reduces the influence of the antenna failure on the RAKE combining result.

The combining unit 406 may gradually increase the weighting factor to be applied to the reception signal of the antenna without any failure for the duration of an antenna failure. If the antenna failure continues for a predetermined time or more, the combining unit 406 may exclude the reception signal of the antenna with the failure from selection of antenna reception signals to be used for RAKE combining.

According to the above-described exemplary embodiments, an antenna failure is detected based on selection result information representing paths used for RAKE combining. The total reception power value of the cell is calculated in accordance with the antenna failure detection state. It is therefore possible to perform effective mobile station transmission power control even when an antenna failure has occurred. Additionally, since mobile station transmission power control can be done without any influence of a degradation in antenna reception signals, it is possible to effectively control the power recourse of the cell and optimize the throughput of the user and cell even when an antenna failure has occurred.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

An example 1 describes a wireless diversity reception apparatus comprising combining means for RAKE-combining signals of multipaths transmitted from a mobile station and received by a plurality of antennas, antenna failure detection means for detecting an antenna failure based on selection result information representing paths used for RAKE combining, mobile station control means for calculating a total reception power value of a cell in accordance with an antenna failure detection state and outputting power control information to make the total reception power value of the cell match a target total reception power value, and transmission means for transmitting the power control information to the mobile station to perform transmission power control of the mobile station.

An example 2 describes the apparatus according to example 1, wherein the mobile station control means comprises cell total reception power value calculation means for, when an antenna failure is detected, calculating the total reception power value of the cell without using a total reception power value of an antenna with the failure.

An example 3 describes the apparatus according to example 1, wherein the mobile station control means comprises cell total reception power value calculation means for, when an antenna failure is detected, making a weighting factor to be applied to a total reception power value of an antenna without any failure larger than a weighting factor to be applied to a total reception power value of an antenna with the failure and defining an average value of the weighted total reception power values as the total reception power value of the cell.

An example 4 describes the apparatus according to example 3, wherein the cell total reception power value calculation means calculates the total reception power value of the cell for duration of the antenna failure while gradually increasing the weighting factor to be applied to the total reception power value of the antenna without any failure and, if the antenna failure continues for not less than a predetermined time, calculates the total reception power value of the cell without using the total reception power value of the antenna with the failure.

An example 5 describes the apparatus according to example 1, wherein when an antenna failure is detected, the combining means excludes a reception signal of an antenna with the failure from selection of antenna reception signals to be used for RAKE combining.

An example 6 describes the apparatus according to example 1, wherein when an antenna failure is detected, the combining means weights antenna reception signals by making a weighting factor to be applied to a reception signal of an antenna without any failure larger than a weighting factor to be applied to a reception signal of an antenna with the failure and performs RAKE combining using the weighted antenna reception signals.

An example 7 describes the apparatus according to example 6, wherein the combining means gradually increases the weighting factor to be applied to the reception signal of the antenna without any failure for duration of the antenna failure and, if the antenna failure continues for not less than a predetermined time, excludes the reception signal of the antenna with the failure from selection of antenna reception signals to be used for RAKE combining.

An example 8 describes the apparatus according to example 1, wherein the antenna failure detection means comprises adding means for adding selection result information, and failure occurrence determination means for, when a ratio of the number of selection result information including paths to arrive at one antenna to the total number of added selection result information exceeds a threshold value, determining that a failure has occurred in the other antenna.

An example 9 describes the apparatus according to example 8, wherein the antenna failure detection means further comprises failure recovery determination means for, when the ratio is not more than the threshold value after the determination of failure occurrence, determining that the failure of the other antenna has recovered.

An example 10 describes the apparatus according to example 1, wherein the antenna failure detection means comprises adding means for calculating the total number of paths included in selection result information for each antenna, and failure occurrence determination means for, when a ratio of the number of paths to arrive at one antenna to the number of paths to arrive at the other antenna exceeds a threshold value, determining that a failure has occurred in the other antenna.

An example 11 describes the apparatus according to example 10, wherein the antenna failure detection means further comprises failure recovery determination means for, when the ratio is not more than the threshold value after the determination of failure occurrence, determining that the failure of the other antenna has recovered.

An example 12 describes a wireless diversity reception method comprising the steps of RAKE-combining signals of multipaths transmitted from a mobile station and received by a plurality of antennas, detecting an antenna failure based on selection result information representing paths used for RAKE combining, calculating a total reception power value of a cell in accordance with an antenna failure detection state, outputting power control information to make the total reception power value of the cell match a target total reception power value, and transmitting the power control information to the mobile station to perform transmission power control of the mobile station.

An example 13 describes the method according to example 12, wherein the calculating step comprises the step of, when an antenna failure is detected, calculating the total reception power value of the cell without using a total reception power value of an antenna with the failure.

## Claims

1. A wireless diversity reception apparatus **characterized by** comprising:
combining means (206, 306, 407) for RAKE-combining signals of multipaths transmitted from a mobile station and received by a plurality of antennas (102, 103);
antenna failure detection means (207, 307, 407) for detecting an antenna failure based on selection result information representing paths used for RAKE combining;
mobile station control means (208, 408) for calculating a total reception power value of a cell in accordance with an antenna failure detection state and outputting power control information to make the total reception power value of the cell match a target total reception power value; and
transmission means (202, 203) for transmitting the power control information to the mobile station to perform transmission power control of the mobile station.

2. An apparatus according to claim 1, wherein said mobile station control means (208) comprises cell total reception power value calculation means (208a) for, when an antenna failure is detected, calculating the total reception power value of the cell without using a total reception power value of an antenna with the failure.

3. An apparatus according to claim 1, wherein said mobile station control means (408) comprises cell total reception power value calculation means (408a) for, when an antenna failure is detected, making a weighting factor to be applied to a total reception power value of an antenna without any failure larger than a weighting factor to be applied to a total reception power value of an antenna with the failure and defining an average value of the weighted total reception power values as the total reception power value of the cell.

4. An apparatus according to claim 3, wherein said cell total reception power value calculation means calculates the total reception power value of the cell for duration of the antenna failure while gradually increasing the weighting factor to be applied to the total reception power value of the antenna without any failure and, if the antenna failure continues for not less than a predetermined time, calculates the total reception power value of the cell without using the total reception power value of the antenna with the failure.

5. An apparatus according to claim 1, wherein when an antenna failure is detected, said combining means (306) excludes a reception signal of an antenna with the failure from selection of antenna reception signals to be used for RAKE combining.

6. An apparatus according to claim 1, wherein when an antenna failure is detected, said combining means (406) weights antenna reception signals by making a weighting factor to be applied to a reception signal of an antenna without any failure larger than a weighting factor to be applied to a reception signal of an antenna with the failure and performs RAKE combining using the weighted antenna reception signals.

7. An apparatus according to claim 6, wherein said combining means gradually increases the weighting factor to be applied to the reception signal of the antenna without any failure for duration of the antenna failure and, if the antenna failure continues for not less than a predetermined time, excludes the reception signal of the antenna with the failure from selection of antenna reception signals to be used for RAKE combining.

8. An apparatus according to claim 1, wherein said antenna failure detection means (207) comprises:
adding means (207a) for adding selection result information; and
failure occurrence determination means (207b) for, when a ratio of the number of selection result information including paths to arrive at one antenna to the total number of added selection result information exceeds a threshold value, determining that a failure has occurred in the other antenna.

9. An apparatus according to claim 8, wherein said antenna failure detection means further comprises failure recovery determination means (207c) for, when the ratio is not more than the threshold value after the determination of failure occurrence, determining that the failure of said other antenna has recovered.

10. An apparatus according to claim 1, wherein said antenna failure detection means comprises:
adding means (407a) for calculating the total number of paths included in selection result information for each antenna; and
failure occurrence determination means (407b) for, when a ratio of the number of paths to arrive at one antenna to the number of paths to arrive at the other antenna exceeds a threshold value, determining that a failure has occurred in the other antenna.

11. An apparatus according to claim 10, wherein said antenna failure detection means further comprises failure recovery determination means (407c) for, when the ratio is not more than the threshold value after the determination of failure occurrence, determining that the failure of said other antenna has recovered.

12. A wireless diversity reception method **characterized by** comprising the steps of:
RAKE-combining signals of multipaths transmitted from a mobile station and received by a plurality of antennas (102, 103);
detecting an antenna failure based on selection result information representing paths used for RAKE combining;
calculating a total reception power value of a cell in accordance with an antenna failure detection state;
outputting power control information to make the total reception power value of the cell match a target total reception power value; and
transmitting the power control information to the mobile station to perform transmission power control of the mobile station.

13. A method according to claim 12, wherein the calculating step comprises the step of, when an antenna failure is detected, calculating the total reception power value of the cell without using a total reception power value of an antenna with the failure.
